# EUROPEAN PATENT APPLICATION

(11) **EP 3 061 835 A1**
(43) Date of publication of application: **31.08.2016**
(21) Application number: 14855301.9
(22) Date of filing: 25.09.2014
(51) Int. Cl.: C21D 1/06, C21D 1/46, C25D 5/10, C25D 5/02

(54) **PARTIAL HEAT TREATMENT METHOD USING DUAL METAL LAYERS**

(30) Priority: 22.10.2013 KR 20130125864
(71) Applicant: DK-LOK Corporation, Gimhae-si, Gyeongsangnam-do 621-842 (KR); Jung, Sam Rae, Busan 617-756 (KR)
(72) Inventor: JUNG, Sam Rae, Busan 617-756 (KR); NOH, Eun Sik, Busan 612-822 (KR)
(74) Representative: Cabinet Chaillot
(86) International application number: PCT/KR2014/008927
(87) International publication number: WO 2015/060549

(57) **Abstract**

Disclosed herein is a partial heat treatment method using a double metal layer, in which a surface of a workpiece is hardened by heat treatment, including the steps of: primarily plating the surface of the workpiece with a first metal layer; secondarily plating the surface of the first metal layer with a second metal layer; partially stripping the first metal layer and the second metal layer to expose a part of the surface of the workpiece; heat-treating the workpiece to harden the exposed surface of the workpiece; and removing the first metal layer and the second metal layer remaining on the surface of the workpiece.

## Description

### 1. Technical Field

The present invention relates to a partial heat-treatment method using a double metal layer. More particularly, the present invention relates to a partial heat-treatment method using a double metal layer, which is used to increase the hardness of the surface of a workpiece by heat-treating the workpiece such that a specific metal diffuses into the surface thereof, wherein a workpiece is partially plated with a double metal layer, thus preventing the rotary torque of the workpiece from being increased by allowing the region of the workpiece not to be heat-treated to be entirely hardened under the influence of heat treatment.

### 2. Description of the Related Art

Heat treatment is generally used as a process for improving the surface hardness of a workpiece. In general heat treatment, a workpiece is in contact with a carburized or nitrided molten salt solution or gas, and thus carbon atoms diffuse to the surface of the workpiece.

Heat treatment using a salt can be used to increase the hardness of a high corrosion resistant metal such as chromium-containing steel (stainless steel). The increase of hardness is caused by the formation of precipitated nitride or precipitated carbide briefly referred to as "nitride" or "carbide".

Here, nitride or carbide is obtained by the precipitation of chromium on nitrogen or carbon. When a metal product has a non-uniform surface structure attributable to the precipitation of chromium, chromium is discharged, so the difference in electronegativity occurs between the chromium-deficient portion and chromium-precipitated portion of the metal product, and this electronegativity difference acts as a kind of galvanic cell, thereby easily corroding the metal product. Since the heat treatment temperature of the precipitate is high, particles easily diffuse into the metal product or the metal product easily corrodes when a large amount of metal elements the same as the precipitate exist in the metal product.

A workpiece is required to be entirely hardened. However, in the case of a component such as ferrule, only a part of the component requires high hardness.

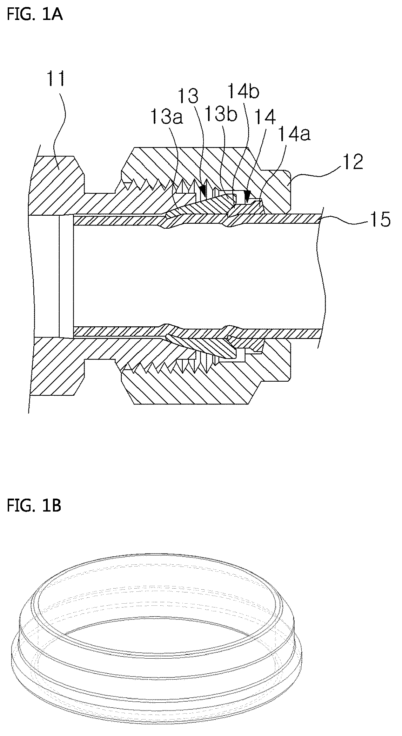

FIG. 1 shows the sectional view and perspective view of a structure of two pipes being connected by a ferrule, which shows the shape and use of the ferrule.

FIG. 1A is a sectional view of a structure of two pipes being connected by a ferrule.

A ferrule is used to connect two pipes, that is, a front pipe 11 and a rear pipe 15. Specifically, the ferrule is a component which is used to hermetically seal the front pipe 11 and the rear pipe 15 by plugging the gap between the pipes 11 and 15 and swaging these pipes 11 and 15 and to prevent these pipes 11 and 15 from being detached from each other.

The ferrule includes a front ferrule 13 and a back ferrule 14.

The back ferrule 14 serves to transfer force to the front ferrule 13 while a nut 12 pushes the tail 14b of the back ferrule 14. In this case, the nut 12 generates rotary torque because it rotates and simultaneously tightens the pipes 11 and 15. When the nut 12 rotates and simultaneously moves forward, the back ferrule 14 twists and simultaneously moves straight in a direction of movement of the nut 12.

In this case, the tail 14b of the back ferrule 14 lifts up the rear lower inclined portion of the front ferrule 13, and simultaneously the nose 14a of the back ferrule 14 swages the pipe 15, thus preventing the pipe 15 from being detached.

Therefore, the above object can be sufficiently accomplished only when the nose 14a of the back ferrule 14 has high hardness. When the entire region of the back ferrule 14 has high hardness, the rotary torque of the nut 12 is not sufficiently absorbed, and thus the brittleness thereof increases. In other words, only the nose 14a of the back ferrule 14 must be selectively hardened.

FIG. 1B is a perspective view showing the shape of a ferrule. The ferrule has a ring shape, and its nose is deformed by the force applied from the rear to the front. Therefore, the nose of the ferrule is not required to be hardened.

The front ferrule 13 includes: a support 13b receiving the pressure generated by tightening the nut 12; and an insert 13a reversibly deformed by the pressure transferred from the support 13 and hermetically sealing and swaging the edges of the pipes. In this case, since high friction and force are applied during the procedure of deformation of the insert 13a, the insert 13a is required to have high hardness and elasticity. Accordingly, components whose specific regions are selectively required to have high hardness, such as front and back ferrules 13 and 14, are required to be partially hardened.

As such, when only a part of a workpiece is required to have high hardness, the workpiece is partially hardened by a partial heat treatment method. In a generally-used partial heat treatment method, a workpiece is plated with different kinds of metals, and this metal plated layer is used as a mask for heat treatment. That is, the workpiece is plated with different kinds of metals, and then the metal plated layer is removed from the region of the workpiece to be hardened, thus exposing the surface of the workpiece to the outside. Then, when the plated workpiece is heat-treated, nitrogen or carbon does not diffuse into the region of the workpiece not exposed to the outside, and thus precipitates are not easily formed. Consequently, only the exposed region of the workpiece is selectively hardened.

However, when the workpiece is heat-treated for a long period of time while being partially hardened by plating, the plated layer is deformed non-uniformly, and particles diffuse into the non-uniformly-deformed plated layer. Therefore there is a problem of precipitates being formed even on undesired region of the workpiece.

### SUMMARY OF THE INVENTION

Accordingly, the present invention has been devised to solve the above-mentioned problems, and an object of the present invention is to provide a partial heat-treatment method using a double metal layer, wherein the surface of a workpiece required not to be heat-treated is doubly plated with a compactly-structured metal, and thus the diffusion of particles into the surface of the workpiece can be blocked during heat treatment, thereby preventing the increase of rotary torque caused by the hardening of the entire workpiece.

In order to accomplish the above object, an aspect of the present invention provides a partial heat treatment method using a double metal layer, in which a surface of a workpiece is hardened by heat treatment, including the steps of: primarily plating the surface of the workpiece with a first metal layer; secondarily plating the surface of the first metal layer with a second metal layer; partially stripping the first metal layer and the second metal layer to expose a part of the surface of the workpiece; heat-treating the workpiece to harden the exposed surface of the workpiece; and removing the first metal layer and the second metal layer remaining on the surface of the workpiece.

Here, the first metal layer may have a different metal structure from that of the workpiece to be stripped without leaving remnants.

Further, the first metal layer may include at least one metal selected from among copper, chromium, nickel and tin.

Further, the second metal layer may have a relatively compact metal structure compared to that of the first metal layer.

Further, the second metal layer may include at least one metal selected from among copper, chromium, nickel and tin, and the metal constituting the second metal layer may be different from the metal constituting the first metal layer.

Further, in the step of partial stripping, the workpiece may be sequentially or simultaneously immersed in a solution to strip the first metal layer and the second metal layer.

Further, the step of heat-treating the workpiece may be performed by salt bath heat treatment.

Further, in the salt bath heat treatment, the workpiece may be heat-treated by immersing the workpiece in an alkali salt-molten solution containing nitrogen and carbon compounds.

Further, the step of heat-treating the workpiece may be performed by nitriding treatment.

Further, the first metal layer may have a thickness of 15 to 50 µm.

Further, the second metal layer may have a thickness of 15 to 50 µm.

Further, the workpiece may be a ferrule for plugging a gap between pipes at the time of connecting the pipes.

Further, the ferrule may include a nose tightly sealing the pipes, and the surface of the nose may be exposed in the step of partial stripping.

Another aspect of the present invention provides a partial heat treatment method using a double metal layer, in which a surface of a ferrule is hardened by heat treatment, including the steps of: primarily plating the surface of the ferrule with a first metal layer; secondarily plating the surface of the first metal layer with a second metal layer; partially stripping the first metal layer and the second metal layer to expose a part of the surface of the ferrule; heat-treating the ferrule to harden the exposed surface of the ferrule; and removing the first metal layer and the second metal layer remaining on the surface of the ferrule.

Here, the first metal layer may include at least one metal selected from among copper, chromium, nickel and tin.

Further, the second metal layer may include at least one metal selected from among copper, chromium, nickel and tin, and the metal constituting the second metal layer may be different from the metal constituting the first metal layer.

Further, in the salt bath heat treatment, the ferrule may be heat-treated by immersing the ferrule in an alkali salt-molten solution containing nitrogen and carbon compounds.

### Advantageous Effect

According to the present invention, it is possible to prevent particles from penetrating a metal layer during heat treatment.

Further, according to the present invention, it is possible to prevent the plated region of a workpiece from being hardened during heat treatment, thus preventing the increase of rotary torque applied to the workpiece.

### BRIEF DESCRIPTION OF THE DRAWINGS

FIG. 1 shows the sectional view (FIG. 1A) and perspective view (FIG. 1B) of a structure of two pipes being connected by a ferrule, which shows the shape and use of the ferrule.
FIG. 2 is a flow diagram showing a process of processing a workpiece according to an embodiment of the present invention;
FIG. 3 is a sectional side view showing a primarily plated ferrule according to an embodiment of the present invention;
FIG. 4 is a sectional side view showing a secondarily plated ferrule according to an embodiment of the present invention;
FIG. 5 is a sectional side view showing a partially stripped ferrule according to an embodiment of the present invention;
FIG. 6 is a schematic sectional side view showing the diffusion of nitrogen or carbon into a ferrule during nitriding or carburizing depending on whether or not plating was performed according to an embodiment of the present invention; and
FIG. 7 is a sectional side view showing a ferrule, from which a plated layer was removed, according to an embodiment of the present invention.

### DESCRIPTION OF THE PREFERRED EMBODIMENTS

Hereinafter, preferred embodiments of the present invention will be described in detail with reference to the attached drawings.

First, throughout the accompanying drawings, the same reference numerals are used to designate the same or similar components, and redundant descriptions thereof are omitted. In this case, the embodiments of the present invention are disclosed only for illustrative purposes and should not be construed as limiting the present invention.

In the partial heat treatment method using a double metal layer according to an embodiment of the present invention, when a workpiece is plated such that a portion of the workpiece, which is required not to be heat-treated, is not carburized or nitrided, the surface of the workpiece is plated with a first metal layer 310, and the surface of the first metal layer 310 is plated with a second metal layer 410.

In other words, the first metal layer 310 is formed of a metal such as copper or the like, and has a different metal structure from that of the workpiece to be easily stripped from the workpiece, and the second metal layer 410 is formed of a metal such as chromium, and a relatively compact metal structure compared to that of the first metal layer. As such, since the workpiece is doubly plated with the first metal layer 310 and the second metal layer 410, it is possible to prevent nitrogen or carbon from diffusing the undesired portion of the workpiece during heat treatment.

Generally, double plating is not used because it is inferred that plating is not uniformly performed and a plated layer is not easily stripped from a workpiece in the case where the double plating is performed in order to obtain a plate layer having uniform thickness. However, since the first metal layer 310 may be deformed or damaged while it is heated for a long time during salt bath heat treatment, double plating may be performed in order to reinforce the deformed or damaged first metal layer 310.

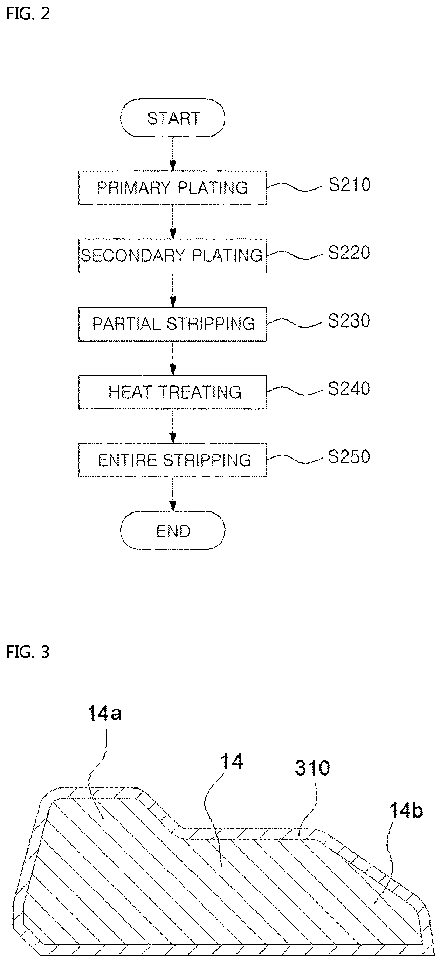

FIG. 2 is a flow diagram showing a process of processing a workpiece according to an embodiment of the present invention.

Referring to FIG. 2, in the step of primary plating (S210), the surface of a workpiece is plated with a first metal layer.

In this case, any plating method may be used. However, it is preferred that electroplating be used, because a vacant plated region is not required.

Among the following processing steps, in the step of stripping a plated layer, when remnants exist even after the plated layer is stripped, the workpiece is not heat-treated.

Therefore, it is preferred that the first metal layer be easily stripped from the workpiece without leaving remnants. In order for the first metal layer to be stripped without leaving remnants, the first metal layer must have a different metal structure from that of the workpiece because remnants must not diffuse the interface between the workpiece and the first metal layer.

In other words, if the interface between the workpiece and the first metal layer is not clear, the first metal layer is not properly applied.

Further, the first metal layer must have high diffusion resistance such that carbon or nitrogen does not diffuse the first metal layer under a high-temperature environment. According to an embodiment of the present invention, copper is proposed as a metal for plating. In this embodiment, the first metal layer made of copper will be described.

However, in addition to copper, a metal, such as chromium, nickel, tin or the like may be used to make the first metal layer because carbon or nitrogen does not diffuse the first metal layer made of this metal and this first metal layer is easily stripped from the workpiece. Further, alloys thereof may also be used to make the first metal layer.

Here, it is preferred that the thickness of the first metal layer be 15 to 50 µm. When the thickness thereof is 15 µm, the first metal layer can prevent the diffusion of a material and can maintain uniform thickness, and, when the thickness thereof is 50 µm, the first metal layer can be easily stripped from the workpiece.

Subsequently, in the step of secondary plating (S220), the surface of the first metal layer is plated with a second metal layer.

In this case, the second metal layer must have a relatively compact metal structure compared to that of the first metal layer, and must be precisely plated on the coarse portion (high energy portion) of the first metal layer. if the first metal layer is made of copper, the second metal layer may be made of a metal such as chromium, nickel, tin, iron or the like, which has a dense and compact structure compared to copper, and may also be made of an alloy thereof.

Here, the first metal layer and the second metal layer must be formed to have a thickness of 15 µm or more such that they can prevent the diffusion of a salt for a long period of time under a high-temperature environment.

Further, when the first metal layer 130 and the second metal layer 140 formed by immersing the workpiece in a solution are stripped, the remnants of the first metal layer 130 and the second metal layer 140 must be completely removed in a short period of stripping time to such a degree that the workpiece is not damaged. Therefore, the first metal layer 130 and the second metal layer 140 must be made thin (thickness: 50 µm or less).

Subsequently, in the step of partial stripping (S230), the first metal layer 310 and the second metal layer 410 are partially stripped, and thus a part of the surface of the workpiece is exposed. The region of the workpiece requiring high hardness may be a nose 14a attached closely to the surface of a pipe by reversible deformation, if the workpiece is a back ferrule 14.

Here, various stripping methods may be used as long as remnants do not exist, only the metal layers are melted and the workpiece is not damaged.

In this case, the first metal layer 130 and the second metal layer 140 may be removed by immersing the workpiece in a solution for melting these metal layers. When the solution can melt both these two metal layers, these two metal layers can be simultaneously removed by immersing the workpiece in this solution. Meanwhile, when the solutions melting the two metal layers are different from each other, first, the workpiece is immersed in the solution melting the outer metal layer, and is then immersed in the solution melting the inner metal layer, thereby sequentially removing these two metal layers. When the first metal layer is a copper layer, the solution melting the first metal layer may be a nitric acid solution, and, when the second metal layer is a chromium layer, the solution melting the second metal layer may be a hydrochloric acid solution.

Subsequently, in the step of heat treatment (S240), the workpiece is heat-treated. In this case, the heat treatment of the workpiece may be performed by salt bath heat treatment. In the salt bath heat treatment, the workpiece may be heat-treated by immersing the workpiece in a high-temperature salt-molten solution. Here, the components diffusing the surface of the workpiece in the process of heat treatment are determined according to the kind of the salt-molten solution.

In this case, the salt bath heat treatment may be performed using a carbon-containing salt or a nitrogen-containing salt. When the salt bath heat treatment (carburization) is performed using the carbon-containing salt, carbon diffuses the workpiece to cause recrystalization, and, when the salt bath heat treatment (nitridation) is performed using the nitrogen-containing salt, nitrogen diffuses the workpiece to cause recrystalization. In this case, the salt may contain an alkali in order to increase the reactivity of the surface of the workpiece.

Here, heat treatment temperature determines the diffusion depth and speed of components diffusing the surface of the workpiece. In other words, when the heat treatment temperature is high, the components can diffuse the surface of the workpiece more deeply and rapidly.

However, when the heat treatment temperature is high, the components (particularly, chromium) included in the workpiece are recrystalized, and thus the workpiece becomes non-uniform. In this case, the non-uniformity of the workpiece causes the electronegativity difference to form a kind of galvanic cell, thus greatly deteriorating the corrosion resistance of the workpiece. Therefore, when the workpiece is heat-treated at low temperature, rather than high temperature, for a long period of time, the components non-uniformly diffuse into the workpiece, thus making the surface of the workpiece uniform and strong. In this case, the corrosion resistance of the workpiece is deteriorated to some degree.

In this case, the low heat treatment temperature may be 500°C or lower at which precipitation is minimized, and the long heat treatment time may be 15 hours or more for which hardness starts to become high.

The diffusion of components occurs over the entire workpiece because heat is applied to the entire workpiece. However, since the components cannot be brought into contact with the plated surface of the workpiece, they cannot diffuse the plated surface thereof. That is, it is difficult to modify the surface of the workpiece by heat treatment.

Meanwhile, even though the workpiece is plated with the metal layer, if the metal layer is not dense or components diffuse the metal layer through long-term heat treatment, the components diffuse the plated surface of the workpiece, so the plate surface thereof is recrystallized, and thus the entire surface thereof is hardened, thereby providing a possibility of rotary torque increasing. When the salt bath heat treatment of the workpiece is performed at low temperature for a long period of time, the metal layer is corroded, and thus the workpiece is necessarily influenced by the salt bath heat treatment.

Therefore, a second metal layer is plated on the first metal layer 310, thus preventing the diffusion of components into the workpiece. Generally, double plating using metals having different properties from each other is not performed because the thickness of the plated layer is not uniform.

However, when secondary plating is performed in order to reinforce the non-uniform primary plated layer, the thickness of the secondary plated layer may not be uniform. The reason for this is that the non-uniform primary plated layer is reinforced by the secondary plated layer, thus providing uniform electronegativity over the entire workpiece.

Therefore, an easily-strippable copper layer may be used as the first metal layer, and the second metal layer may be made of at least one metal selected from among iron, nickel, chromium and tin. The second metal layer is more compact than the first metal layer. That is, the second metal layer may be made of metals different from those constituting the first metal layer, or may be made of alloys thereof.

In this case, the heat treatment of the workpiece may not be performed by immersing the workpiece in a salt bath, and may be performed by applying a high-temperature gas or aerosol-phase material onto the workpiece. Here, salt bath heat treatment is advantageous to the production of high-quality workpieces because the surface of the workpiece is uniformly denatured. Further, low-temperature heat treatment has a tendency to allow a material to slowly diffuse the workpiece. Since nitrogen, compared to carbon, rapidly diffuses the surface of the workpiece, it is advantageous that the salt bath heat treatment is a nitriding treatment. In the nitriding treatment, partial pressure of nitrogen is maintained high, and the workpiece is heat-treated by immersing the workpiece in a salt-molten solution containing nitrogen oxides or nitrogen and carbon compounds, by which the workpiece is hardened more uniformly and rapidly.

Subsequently, in the step of entire stripping (S250), residual first and second metal layers are stripped. In the step 250 (S250), residual metal layers may be stripped using a solution, as in the step of partial stripping (S230). The step 250 (S250) may include the step of ascertaining whether or not residual metal layers exist after the stripping is finished. Meanwhile, residual metal layers may be stripped by a physical method when it is determined that a chemical method is not suitable because the corrosion resistance of the workpiece is deteriorated due to the hardening thereof after heat treatment. In other words, residual layers may also be removed by a physical method such as polishing.

Up to now, a method of partially heat-treating a workpiece has been described. Hereinafter, when a workpiece is a ferrule, a method of partially heat-treating a ferrule will be described using intermediates produced in steps with reference to FIGS. 3 to 7.

FIG. 3 is a sectional side view showing a primarily plated ferrule according to an embodiment of the present invention.

A back ferrule 14 includes: a tail 14b resisting the pressure applied from the rear end thereof; and a nose 14a connected with the tail 14b and hermetically sealing a pipe by irreversible deformation attributable to the pressure transferred from the tail 14b. Since it is difficult to plate a portion of the back ferrule 14, excluding the nose 14a, such that only the nose 14a of the back ferrule 14 is exposed, first, the back ferrule 14 is entirely plated, and then the portion corresponding to the nose 14 is selectively stripped. Therefore, in the step of primary plating, the entire back ferrule 14 is plated with a first metal layer 310. The composition of the first metal layer 310 must be different from that of the back ferrule 14, and thus the first metal layer 310 must be easily separated from the back ferrule 14 by chemical or physical treatment. For example, when the back ferrule 14 is made of stainless steel, the first metal layer 310 may be made of copper. The first metal layer 310 may have a thickness of 15 µm or more such that the back ferrule 14 is protected from foreign matter while its surface being completely plated, and may have a thickness of 50 µm or less such that remnants do not exist during chemical stripping. The plating of the first metal layer 310 may be performed by electroplating, but may also be performed by any plating method as long as the surface of the ferrule 14 can be completely plated with the first metal layer 310.

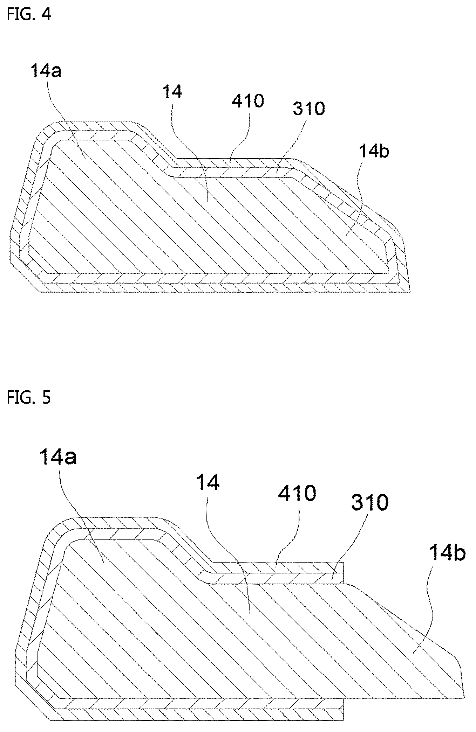

FIG. 4 is a sectional side view showing a secondarily plated ferrule according to an embodiment of the present invention.

In the step of primary plating, a second metal layer 410 is plated on the first metal layer. During long-term heat treatment, a material such as nitrogen or carbon diffuses the first metal layer 310. Therefore, the back ferrule is secondarily plated with the second metal layer 410 which is more compact than the first metal layer 310. Since the first metal layer 310 and second metal layer 410 are different from each other in compactness, it is difficult to form uniform plated layers. However, in the case of electroplating, the first metal layer 310 is thinly formed on the back ferrule 14, and the second metal layer 410 is thickly formed on the first metal layer 310, so nonuniform plating, rather than uniform plating, may be more suitable for reinforcing the weak portion of the first metal layer 310 using the second metal layer 410. The plating of the second metal layer 410 may be performed by electroplating, but may also be performed by any plating method as long as the surface of the first metal layer 310 can be completely plated with the second metal layer 410.

The second metal layer 410 may be made of iron, nickel, chromium, tin or an alloy thereof, which is more compact than copper and is resistant to acid. The second metal layer 410 may have a thickness of 15 µm or more such that the back ferrule 14 is protected from foreign matter while its surface being completely plated, and may have a thickness of 50 µm or less such that remnants do not exist during chemical stripping.

FIG. 5 is a sectional side view showing a partially stripped ferrule according to an embodiment of the present invention.

After the secondary plating, the plated layers formed on the nose 14a of the back ferrule 14 are removed. That is, these plated layers may be removed by immersing them in a solvent that can melt them. For example, since copper is melted in nitric acid and iron, nickel, chromium and tin are melted in hydrochloric acid, the plated layers formed on the nose 14a of the back ferrule 14 are sequentially immersed in nitric acid and hydrochloric acid or simultaneously immersed in a mixture of nitric acid and hydrochloric acid, thereby removing these plated layers.

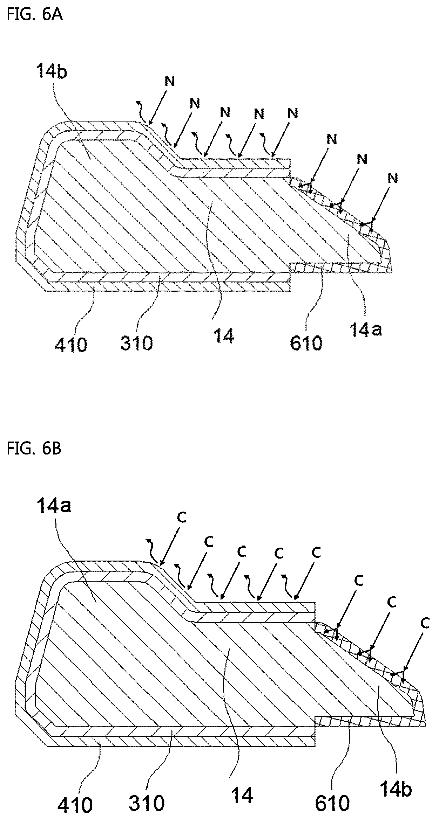

FIG. 6 is a schematic sectional side view showing the diffusion of nitrogen or carbon into a back ferrule during nitriding or carburizing depending on whether or not plating was performed according to an embodiment of the present invention.

As shown in FIG. 6A, nitrogen diffuses the surface-exposed nose 14a of the back ferrule 14, and thus the surface 610 of the nose 14a of the back ferrule 14 is denatured, thus increasing the hardness thereof. In contrast, nitrogen cannot diffuse the tail 14b of the back ferrule 14, and thus the surface of the tail 14b of the back ferrule 14 is not denatured. FIG. 6B is a schematic sectional view showing the diffusion of carbon into each portion of the back ferrule

The heat treatment of the back ferrule may be performed by salt bath heat treatment. In the salt bath heat treatment, a molten salt containing an alkali metal and a nitrogen compound or a molten salt containing an alkali metal and nitrogen and carbon compounds may be used. That is, the salt bath heat treatment may be a nitriding treatment. Further, in the salt bath heat treatment, a molten salt containing an alkali metal and a carbon compound may be used. That is, the salt bath heat treatment may be carburizing treatment.

When the heat treatment temperature is high, chromium can be recrystallized by the high-temperature treatment itself. Therefore, it is preferred that heat treatment be 500°C or lower. When the heat treatment temperature is lowered, the diffusion speed of nitrogen or carbon is decreased, and thus heat treatment can be performed for a long period of time. In this case, it is preferred that the heat treatment time be 24 to 48 hours.

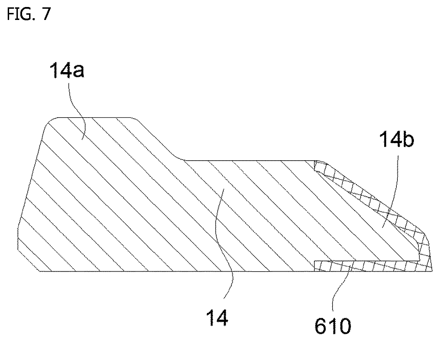

FIG. 7 is a sectional side view showing a ferrule, from which a plated layer was removed, according to an embodiment of the present invention.

After the heat treatment is finished, salts are removed from the back ferrule 14, and the back ferrule 14 is cooled. The first metal layer 310 and second metal layer 410 covering the tail 14b are removed by sequentially melting them using a solvent, thus completing a back ferrule 14, only the nose 14a of which is hardened.

A metal having corrosion resistance, such as stainless steel, can be protected because its surface is provided with an oxide film. Therefore, prior to the heat treatment of a back ferrule 14 or a workpiece, an oxide film must be removed therefrom by immersing the back ferrule 14 or the workpiece in an alkali metal salt solution. Therefore, in the step of heat treatment, a salt-molten solution generally contains an alkali metal, and this alkali metal-containing salt-molten solution was used in the present invention. However, this alkali metal-containing salt-molten solution may not be used as long as the oxide film can be removed by physically scrubbing the oxide film or by using a reductant instead of an alkali metal.

Up to now, a back ferrule 14 was illustrated as an example of a workpiece required to be partially hardened. However, as described in the related art, a front panel 13 as well as a back ferrule 14 are also required to be partially hardened. That is, the present invention may be applied to general ferrules or workpieces requiring corrosion resistance and high hardness.

## Claims

1. A partial heat treatment method using a double metal layer, in which a surface of a workpiece is hardened by heat treatment, comprising the steps of:
primarily plating the surface of the workpiece with a first metal layer;
secondarily plating the surface of the first metal layer with a second metal layer;
partially stripping the first metal layer and the second metal layer to expose a part of the surface of the workpiece;
heat-treating the workpiece to harden the exposed surface of the workpiece; and
removing the first metal layer and the second metal layer remaining on the surface of the workpiece.

2. The partial heat treatment method of claim 1, wherein the first metal layer has a different metal structure from that of the workpiece to be stripped without leaving remnants.

3. The partial heat treatment method of claim 2, wherein the first metal layer includes at least one metal selected from among copper, chromium, nickel and tin.

4. The partial heat treatment method of claim 1, wherein the second metal layer has a relatively compact metal structure compared to that of the first metal layer.

5. The partial heat treatment method of claim 4, wherein the second metal layer includes at least one metal selected from among copper, chromium, nickel and tin, and the metal constituting the second metal layer is different from the metal constituting the first metal layer.

6. The partial heat treatment method of claim 1, wherein, in the step of partial stripping, the workpiece is sequentially immersed in a solution to strip the first metal layer and the second metal layer.

7. The partial heat treatment method of claim 1, wherein the step of heat-treating the workpiece is performed by salt bath heat treatment.

8. The partial heat treatment method of claim 7, wherein, in the salt bath heat treatment, the workpiece is heat-treated by immersing the workpiece in an alkali salt-molten solution containing nitrogen and carbon compounds.

9. The partial heat treatment method of claim 1, wherein the step of heat-treating the workpiece is performed by nitriding treatment.

10. The partial heat treatment method of claim 1, wherein the first metal layer has a thickness of 15 to 50 µm.

11. The partial heat treatment method of claim 1, wherein the second metal layer has a thickness of 15 to 50 µm.

12. The partial heat treatment method of claim 1, wherein the workpiece is a ferrule for plugging a gap between pipes at the time of connecting the pipes.

13. The partial heat treatment method of claim 12, wherein the ferrule includes a nose tightly sealing the pipes by irreversible deformation, and the surface of the nose is exposed in the step of partial stripping.

14. A partial heat treatment method using a double metal layer, in which a surface of a ferrule is hardened by heat treatment, comprising the steps of:
primarily plating the surface of the ferrule with a first metal layer;
secondarily plating the surface of the first metal layer with a second metal layer;
partially stripping the first metal layer and the second metal layer to expose a part of the surface of the ferrule;
heat-treating the ferrule to harden the exposed surface of the ferrule; and
removing the first metal layer and the second metal layer remaining on the surface of the ferrule.

15. The partial heat treatment method of claim 14, wherein the first metal layer includes at least one metal selected from among copper, chromium, nickel and tin.

16. The partial heat treatment method of claim 14, wherein the second metal layer includes at least one metal selected from among copper, chromium, nickel and tin, and the metal constituting the second metal layer is different from the metal constituting the first metal layer.

17. The partial heat treatment method of claim 14, wherein, in the salt bath heat treatment, the ferrule is heat-treated by immersing the ferrule in an alkali salt-molten solution containing nitrogen and carbon compounds.
